# EUROPÄISCHE PATENTANMELDUNG

(11) **EP 3 117 898 A1**
(43) Veröffentlichungstag der Anmeldung: **18.01.2017**
(21) Anmeldenummer: 15176814.0
(22) Anmeldetag: 15.07.2015
(51) Int. Cl.: B01J 19/00, B01J 37/03, B01J 23/745, B01J 23/78, B01J 23/89

(54) **HERSTELLUNG EINES MISCHKATALYSATORS**

(71) Anmelder: i² Gesellschaft für Innovation mbH, 34497 Korbach (DE)
(72) Erfinder: Koehne, Tim, 28215 Bremen (DE); Böhm, Raphael, 28209 Bremen (DE)
(74) Vertreter: Michalski Hüttermann & Partner Patentanwälte mbB

(57) **Zusammenfassung**

Beschrieben sind ein Verfahren, eine Verwendung und ein Mischkatalysator. Der Mischkatalysator weist ein Metalloxid aus der achten Gruppe, ein Metalloxid aus der siebten, elften oder zwölften Gruppe und ein Metalloxid oder Halbmetalloxid aus der dreizehnten oder vierzehnten Gruppe oder aus den Lanthanoiden auf. Der Mischkatalysator wird in einem Mikrokanalreaktor hergestellt, der Einlässe für die Reaktanden und einen Auslass für das Produkt enthält. Die Einlässe und der Auslass stehen miteinander durch Verzweigungen in Verbindung.

## Beschreibung

### TECHNISCHES GEBIET

Die vorliegende Offenbarung betrifft die Herstellung eines Mischkatalysators. Insbesondere weist das Verfahren typischerweise den Einsatz eines Mikrokanals mit einer Mehrzahl an Verzweigungen auf Offenbart sind auch eine Verwendung eines Mikrokanalreaktors sowie ein Mischkatalysator.

### HINTERGRUND

Katalysatoren wirken auf die Kinetik einer chemischen Reaktion ein, indem sie eine chemische Reaktion beschleunigen und ggf. dadurch erst ermöglichen. Heterogene Katalysatoren sind in der Regel Feststoffe, die eine Reaktion im gasförmigen oder flüssigen Medium katalysieren. Sie entfalten ihre katalytischen Eigenschaften an der Grenzfläche zum entsprechenden Medium. Metallkatalysatoren werden beispielsweise in Reduktions- und Oxidationsreaktionen wie Hydrierungs- oder Dehydrierungsreaktionen eingesetzt.

Ein bekanntes Beispiel für den Einsatz eines Metallkatalysators ist das Fischer-Tropsch-Verfahren, bei dem die Reaktion von Wasserstoff und Kohlenmonoxid unter Druck zu Methan, flüssigen Kohlenwasserstoffen oder Alkoholen katalysiert wird. Eingesetzt werden Metalle wie Eisen, Kobalt, Nickel oder Ruthenium auf einem Träger wie beispielsweise Aluminiumoxid. Auch die Reaktion von Kohlendioxid und Wasserstoff zu Kohlenwasserstoffen lässt sich mit solchen Katalysatoren erreichen, wobei für den Einsatz von Kohlendioxid im Vergleich zu Kohlenmonoxid die Wahl des Katalysators angepasst werden muss. Eine solche Hydrierungsreaktion ist von Riedel et al. (Ind. Eng. Chem. Res. [2001] 40, 1355-1363) beschrieben, die einen Mischkatalysator bestehend aus Eisen, Kupfer und Kalium sowie Aluminiumoxid zur katalytischen Umwandlung von Kohlendioxid zu Kohlenwasserstoffen einsetzen.

Riedel et al. stellen den entsprechenden Katalysator durch Cofällung her. Dabei wird eine wässrige Nitratlösung der Metalle Eisen, Kupfer und Aluminium gegen eine wässrige Ammoniaklösung gefällt. Kaliumcarbonat wird zum Imprägnieren des gewaschenen, getrockneten und zerkleinerten Rohkatalysators eingesetzt und anschließend erneut getrocknet. An Hand ihrer Untersuchungen unter Verwendung dieses Katalysators bestätigen Riedel et al. die Annahme, dass Kohlendioxid in einem ersten Schritt in Kohlenmonoxid überführt wird, das dann zu Kohlenwasserstoffen reagiert.

### ZUSAMMENFASSUNG

Offenbart sind ein Verfahren zur Herstellung eines Mischkatalysators, eine Verwendung eines Mikrokanalreaktors zur Herstellung eines Mischkatalysators und ein Mischkatalysator, der durch das hier offenbarte Verfahren gewonnen werden kann bzw. gewonnen worden ist. Das Verfahren kann zur Herstellung eines beliebigen Mischkatalysators eingesetzt werden, solange sich der Mischkatalysator durch Nassfällung gewinnen lässt.

In einem ersten Aspekt wird ein Verfahren zur Herstellung eines Mischkatalysators offenbart. Der Mischkatalysator weist ein Oxid eines ersten Übergangsmetalls aus der achten Gruppe des Periodensystems der Elemente und ein Oxid eines zweiten Übergangsmetalls aus der siebten, elften oder zwölften Gruppe des Periodensystems der Elemente auf. Darüber hinaus weist der Mischkatalysator auch ein Oxid eines Trägermetalls oder Trägerhalbmetalls auf. Das Trägermetall ist typischerweise ein Metall oder Halbmetall aus der dreizehnten oder vierzehnten Gruppe oder aus den Lanthanoiden. Das Verfahren weist Einleiten einer nicht-gesättigten Lösung eines Salzes des Trägermetalls oder Trägerhalbmetalls in einen Mikrokanal auf. Die Lösung des Salzes des Trägermetalls bzw. -halbmetalls wird durch einen ersten Einlass des Mikrokanals in den Mikrokanal eingeleitet. Das Verfahren weist auch Einleiten einer alkalischen Lösung durch einen zweiten Einlass des Mikrokanals in diesen auf. Das Verfahren weist auch Einleiten einer nicht-gesättigten Lösung eines Salzes des ersten Übergangsmetalls durch einen dritten Einlass des Mikrokanals in diesen auf. Darüber hinaus weist das Verfahren Einleiten einer nicht-gesättigten Lösung eines Salzes des zweiten Übergangsmetalls in den Mikrokanal auf. Die nicht-gesättigte Lösung des Salzes des zweiten Übergangsmetalls kann in einigen Ausführungsformen durch den dritten Einlass des Mikrokanals eingeleitet werden. In einigen Ausführungsformen wird die nicht-gesättigte Lösung des Salzes des zweiten Übergangsmetalls durch einen vierten Einlass des Mikrokanals eingeleitet. Der erste, der dritte und ggf. der vierte Einlass des Mikrokanals stehen miteinander durch Verzweigungen des Mikrokanals in Verbindung. In der Regel weist der Mikrokanal des Weiteren einen Auslass auf.

Der Mikrokanal ist in der Regel in einem Mikrokanalreaktor enthalten. In einigen Ausführungsformen weist ein Verfahren gemäß dem ersten Aspekt auf, dass ein geeigneter Mikrokanalreaktor bereitgestellt wird, der den genannten Mikrokanal enthält. Ein solcher Mikrokanalreaktor ist in einigen Ausführungsformen ein Einzelkanalmikroreaktor.

In typischen Ausführungsformen stehen auch der zweite, der dritte und ggf. der vierte Einlass des betreffenden Mikrokanals miteinander durch Verzweigungen des Mikrokanals in Verbindung. Der zweite, der dritte und ggf. der vierte Einlass können beispielsweise miteinander durch T-Verzweigungen oder durch Y-Verzweigungen des Mikrokanals in Verbindung stehen. In einigen Ausführungsformen sind alle Einlässe und der Auslass miteinander durch T-Verzweigungen verbunden. In einigen Ausführungsformen sind alle Einlässe und der Auslass miteinander durch Y-Verzweigungen verbunden. In einigen Ausführungsformen befinden sich der erste und der zweite Einlass des Mikrokanals an gegenüberliegenden Enden einer Verzweigung des Mikrokanals.

In einigen Ausführungsformen stehen der Auslass, der erste, der dritte und ggf. der vierte Einlass des Mikrokanals miteinander durch Verzweigungen des Mikrokanals in Verbindung. Der Auslass, der erste, der dritte und ggf. der vierte Einlass des Mikrokanals können miteinander beispielsweise durch T-Verzweigungen oder durch Y-Verzweigungen des Mikrokanals in Verbindung stehen. In einigen Ausführungsformen befinden sich der erste und/oder der zweite Einlass an einem ersten Ende des Mikrokanals und der Auslass befindet sich an einem zweiten Ende desselben. In einigen Ausführungsformen befinden sich der dritte und ggf. der vierte Einlass zwischen dem ersten Einlass und dem Auslass. In einigen Ausführungsformen befinden sich der dritte und ggf. der vierte Einlass zwischen dem zweiten Einlass und dem Auslass. In einigen Ausführungsformen befinden sich der dritte und ggf. der vierte Einlass zwischen einerseits dem ersten und dem zweiten Einlass und andererseits dem Auslass.

Die nicht-gesättigte Lösung eines Salzes des Trägermetalls oder Trägerhalbmetalls weist in einigen Ausführungsformen eine Konzentration des Salzes des Trägermetalls/ -halbmetalls von 0,05 M oder weniger auf. Die nicht-gesättigte Lösung eines Salzes des ersten Übergangsmetalls weist in einigen Ausführungsformen ebenfalls eine Konzentration des Salzes des ersten Übergangsmetalls von 0,05 M oder weniger auf. Auch die nicht-gesättigte Lösung eines Salzes des zweiten Übergangsmetalls weist in einigen Ausführungsformen eine Konzentration des Salzes des zweiten Übergangsmetalls von 0,05 M oder weniger auf.

Wie erwähnt, befinden sich in einigen Ausführungsformen des Verfahrens gemäß dem ersten Aspekt der erste und der zweite Einlass des Mikrokanals an gegenüberliegenden Enden einer Verzweigung eines Mikrokanals. Beim Einleiten einer nicht-gesättigten Lösung eines Salzes des Trägermetalls/ Trägerhalbmetalls durch den ersten Einlass und dem Einleiten einer alkalischen Lösung durch den zweiten Einlass strömen in diesen Ausführungsformen diese beiden Edukte aufeinander zu.

In einigen Ausführungsformen des Verfahrens gemäß dem ersten Aspekt erfolgen ein Einleiten der nicht-gesättigten Lösung eines Salzes des ersten Übergangsmetalls und ein Einleiten einer nicht-gesättigten Lösung eines Salzes des zweiten Übergangsmetalls gleichzeitig. In einigen Ausführungsformen erfolgen ein Einleiten der nicht-gesättigten Lösung eines Salzes des Trägermetalls oder Trägerhalbmetalls, ein Einleiten einer alkalischen Lösung, ein Einleiten einer nicht-gesättigten Lösung eines Salzes des ersten Übergangsmetalls und ein Einleiten einer nicht-gesättigten Lösung eines Salzes des zweiten Übergangsmetalls gleichzeitig. In einigen Ausführungsformen wird das Verfahren durch kontinuierliches Einleiten der nicht-gesättigten Lösung eines Salzes des Trägermetalls oder Trägerhalbmetalls, kontinuierliches Einleiten einer alkalischen Lösung, kontinuierliches Einleiten einer nicht-gesättigten Lösung eines Salzes des ersten Übergangsmetalls und kontinuierliches Einleiten einer nicht-gesättigten Lösung eines Salzes des zweiten Übergangsmetalls geführt.

In einigen Ausführungsformen in denen ein vierter Einlass vorhanden ist befindet sich der dritte Einlass des Mikrokanals zwischen dem zweiten Einlass und dem vierten Einlass. In einigen Ausführungsformen befindet sich der vierte Einlass zwischen dem zweiten Einlass und dem dritten Einlass.

In einigen Ausführungsformen beinhaltet das Verfahren gemäß dem ersten Aspekt ein Auffangen des aus dem Auslass austretenden Rohkatalysators. Der Rohkatalysator kann gewaschen und getrocknet werden. In einigen Ausführungsformen kann auf den Rohkatalysator, beispielsweise nach Waschen und Trocknen, ein Oxid eines Alkalimetalls aufgebracht werden. Beispielsweise kann das Oxid eines Alkalimetalls auf den Rohkatalysator durch Imprägnieren aufgebracht werden.

In einigen Ausführungsformen erfolgen ein Einleiten der nicht-gesättigten Lösung eines Salzes des Trägermetalls/-halbmetalls und ein Einleiten einer alkalischen Lösung, bevor ein Einleiten der nicht-gesättigten Lösungen eines Salzes des ersten Übergangsmetalls erfolgt. In solchen Ausführungsformen können das Einleiten der nicht-gesättigten Lösung eines Salzes des Trägermetalls/-halbmetalls und das Einleiten einer alkalischen Lösung auch vor dem Einleiten eines Salzes des zweiten Übergangsmetalls erfolgen. In einigen Ausführungsformen umfasst das Verfahren Einleiten der nicht-gesättigten Lösung des Salzes des Trägermetalls/ -halbmetalls und Einleiten der alkalischen Lösung, bevor die nicht-gesättigten Lösungen des Salzes des ersten Übergangsmetalls und des Salzes des zweiten Übergangsmetalls in den Mikrokanal eingeleitet werden.

In einigen Ausführungsformen weist das Verfahren gemäß dem ersten Aspekt auf Beenden des Einleitens der nicht-gesättigten Lösung eines Salzes des Trägermetalls bzw. -halbmetalls, bevor ein Einleiten der nicht-gesättigten Lösungen eines Salzes des ersten Übergangsmetalls und ein Einleiten eines Salzes des zweiten Übergangsmetalls erfolgen.

In einigen Ausführungsformen des Verfahrens gemäß dem ersten Aspekt ist das Salz des Trägermetalls bzw. -halbmetalls ein Nitrat. In einigen Ausführungsformen weist das Trägermetall Aluminium auf. In einigen Ausführungsformen weist das Trägermetall Titan auf. In einigen Ausführungsformen weist das Trägerhalbmetall Silizium auf. So kann das Trägermetall oder Trägerhalbmetall im Wesentlichen aus Titan bestehen. Das Trägermetall oder Trägerhalbmetall kann auch im Wesentlichen aus Aluminium bestehen. In einigen Ausführungsformen kann das Trägermetall oder Trägerhalbmetall im Wesentlichen aus Silizium bestehen. In einigen Ausführungsformen besteht das Trägermetall oder Trägerhalbmetall im Wesentlichen aus einer Mischung von zwei Elementen aus Aluminium, Silizium und Titan. In einigen Ausführungsformen besteht das Trägermetall oder Trägerhalbmetall im Wesentlichen aus einer Mischung von Aluminium, Silizium und Titan. In einigen Ausführungsformen besteht das Trägermetall oder Trägerhalbmetall aus Titan. In einigen Ausführungsformen besteht das Trägermetall oder Trägerhalbmetall aus Silizium. Das Trägermetall oder Trägerhalbmetall kann auch aus Aluminium bestehen. In einigen Ausführungsformen weist die alkalische Lösung Ammoniak auf. In einigen Ausführungsformen weist die alkalische Lösung ein Carbonat wie z.B. Kaliumcarbonat auf.

Gemäß einem zweiten Aspekt wird die Verwendung eines Mikrokanalreaktors zur Herstellung eines Mischkatalysators bereitgestellt. Der Mikrokanalreaktor weist einen Mikrokanal auf. Der Mikrokanal weist zwei oder mehr Verzweigungen auf. Der Mikrokanal weist auch einen ersten Einlass, einen zweiten Einlass und einen dritten Einlass auf. Der Mikrokanal weist auch einen Auslass auf. Jeder Einlass und der Auslass des Mikrokanals befinden sich typischerweise am Ende einer Verzweigung.

Der erste Einlass, der zweite Einlass, der dritte Einlass und der Auslass stehen in der Regel über den Mikrokanal miteinander in fluider Verbindung. In einigen Ausführungsformen besteht der Mikrokanalreaktor im Wesentlichen aus einem Mikrokanal, dem ersten Einlass, dem zweiten Einlass, dem dritten Einlass und dem Auslass. In einigen Ausführungsformen besteht der Mikrokanalreaktor aus einem Mikrokanal, dem ersten Einlass, dem zweiten Einlass, dem dritten Einlass und dem Auslass.

In einigen Ausführungsformen weist der Mikrokanal auch einen vierten Einlass auf. In diesen Ausführungsformen weist der Mikrokanal drei T-Verzweigungen auf. Der erste Einlass, der zweite Einlass, der dritte Einlass, der vierten Einlass und der Auslass stehen in solchen Ausführungsformen in der Regel über den Mikrokanal miteinander in fluider Verbindung. In einigen Ausführungsformen besteht der Mikrokanalreaktor im Wesentlichen aus einem Mikrokanal, dem ersten Einlass, dem zweiten Einlass, dem dritten Einlass, dem vierten Einlass und dem Auslass. In einigen Ausführungsformen besteht der Mikrokanalreaktor aus einem Mikrokanal, dem ersten Einlass, dem zweiten Einlass, dem dritten Einlass, dem vierten Einlass und dem Auslass.

Wie bereits zuvor angegeben, ist der Mikrokanal in der Regel Bestandteil eines Mikrokanalreaktors. In einigen Ausführungsformen ist der Mikrokanalreaktor auf einem Chip angeordnet. Der oder die Mikrokanäle können beispielsweise in die Oberfläche eines Chips eingeätzt sein.

Gemäß einem dritten Aspekt betrifft die vorliegende Offenbarung einen Mischkatalysator. Der Mischkatalysator weist ein Oxid eines ersten Übergangsmetalls aus der achten Gruppe des Periodensystems der Elemente auf Der Mischkatalysator weist auch ein Oxid eines zweiten Übergangsmetalls aus der siebten, elften oder zwölften Gruppe des Periodensystems der Elemente auf Der Mischkatalysator weist auch ein Oxid eines Trägermetalls oder Trägerhalbmetalls aus der dreizehnten oder vierzehnten Gruppe des Periodensystems oder aus den Lanthanoiden auf. Der Mischkatalysator ist durch das Verfahren gemäß dem ersten Aspekt herstellbar. Der Mischkatalysator ist in der Regel durch das Verfahren gemäß dem ersten Aspekt hergestellt.

Die im Vorangehenden beschriebene Zusammenfassung ist nicht einschränkend und weitere Merkmale und Vorteile der hier beschriebenen Zusammensetzungen, Anwendungen und Verfahren werden aus der folgenden ausführlichen Beschreibung und den Patentansprüchen ersichtlich werden.

### KURZE BESCHREIBUNG DER ZEICHNUNGEN

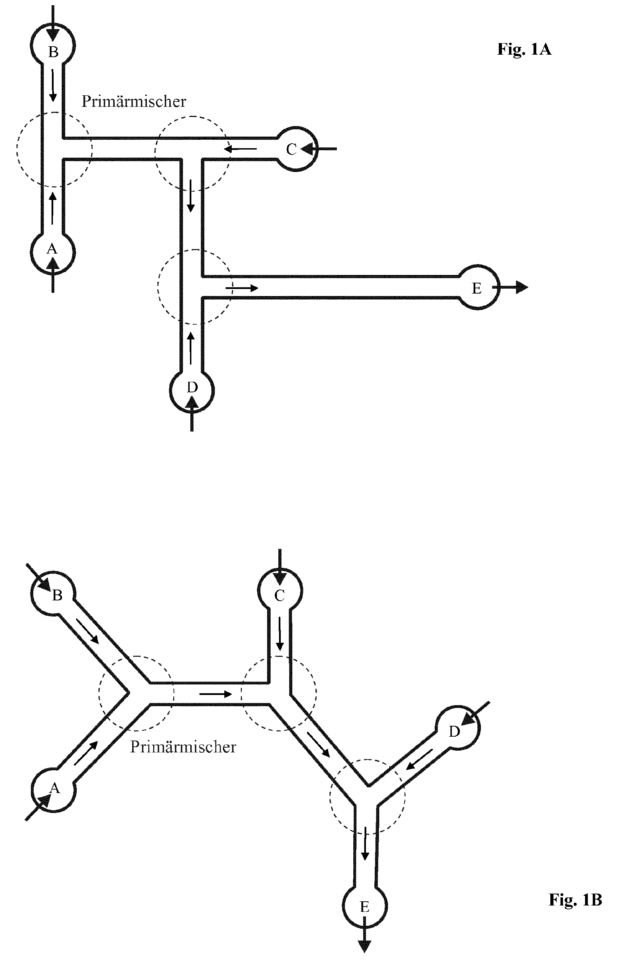

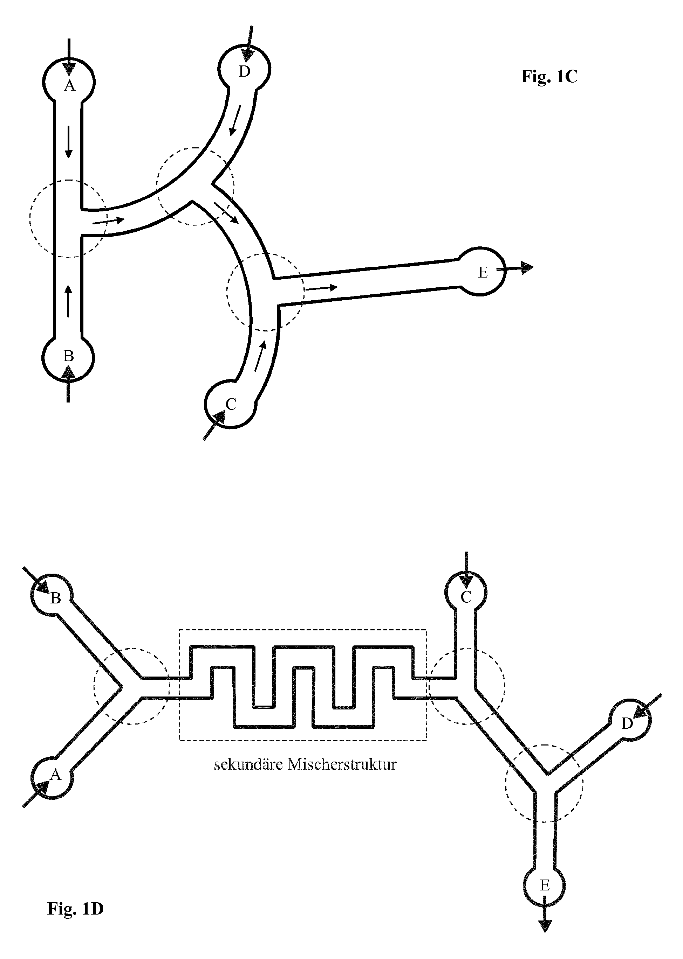

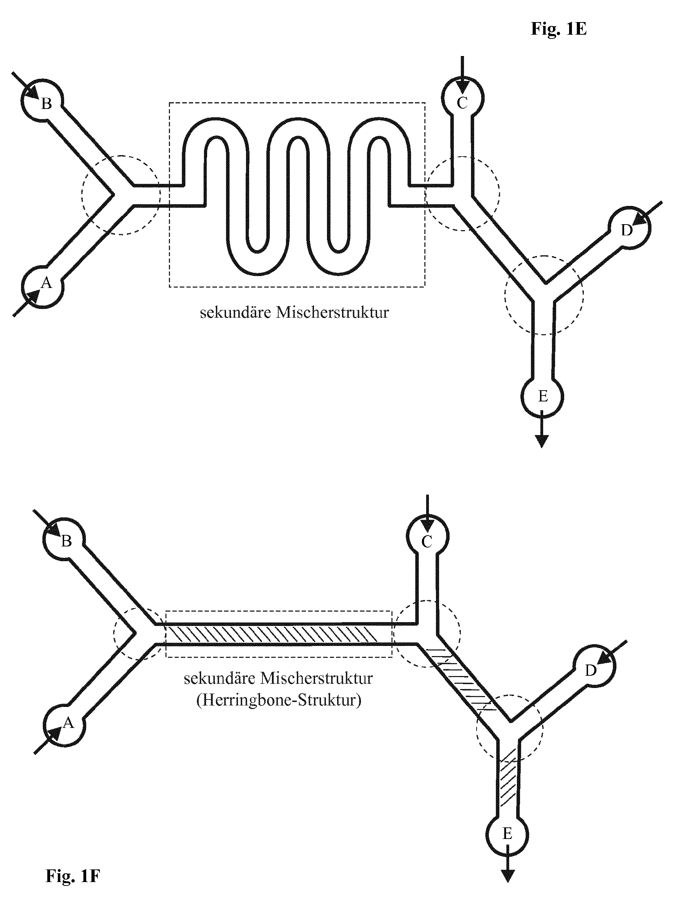

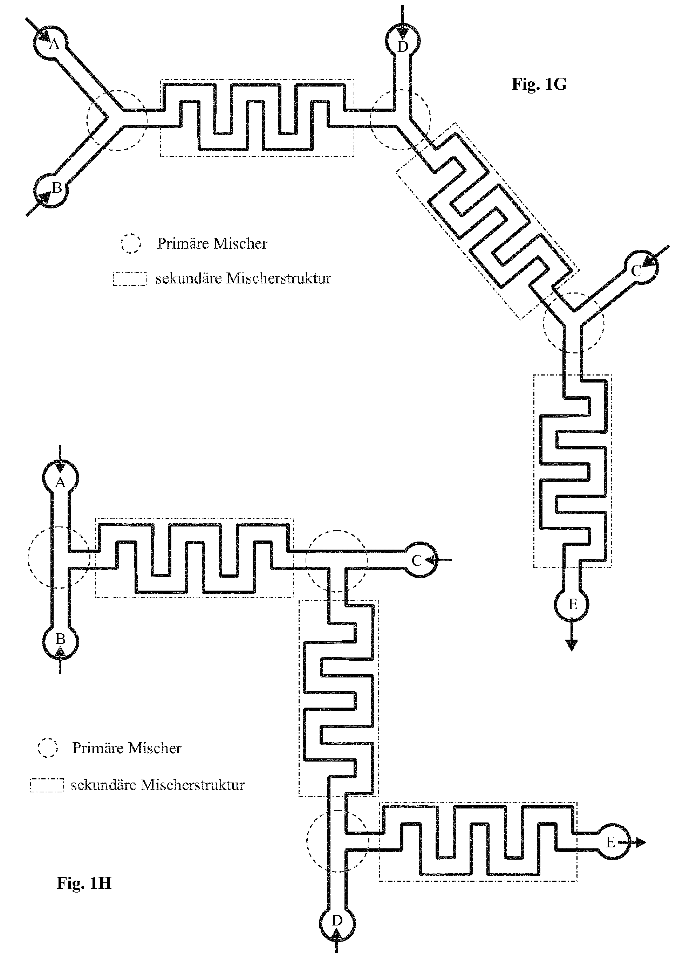

**Figur 1** zeigt verschiedenen Varianten einer Ausführungsform eines Mikrokanals im Betrieb gemäß einer Ausführungsform des hier offenbarten Verfahrens; A: erster Einlass, über den eine nicht-gesättigte Lösung eines Salzes des Trägermetalls bzw. oder -halbmetalls eingeleitet wird; B: zweiter Einlass, über den eine alkalische Lösung eingeleitet wird; C: dritter Einlass, über den eine nicht-gesättigte Lösung eines Salzes des ersten Übergangsmetalls eingeleitet wird; D: vierter Einlass, über den eine gesättigte Lösung eines Salzes des zweiten Übergangsmetalls eingeleitet wird; E: Auslass. **Fig. 1A, Fig. 1B** und **Fig. 1C** zeigen verschiedene Anordnungen von Verzweigungen. Die Verzweigungen sind jeweils durch einen Kreis markiert und als Primärmischer bezeichnet. Die in Fig. 1A gezeigte Ausführungsform weist rechtwinklige T-Verzweigungen auf. Die in Fig. 1B gezeigte Ausführungsform weist Verzweigungen mit unterschiedlichen Winkeln auf. Die in Fig. 1C gezeigte Ausführungsform weist einen Mikrokanal mit bogenförmigen Elementen auf. **Fig. 1D****,** **Fig. 1E, Fig. 1F****, Fig. IG** und **Fig. 1H** zeigen verschiedene geometrische Strukturen, die im Mikrokanal enthalten sind und als sekundäre Mischerstruktur bezeichnet sind. Auch hier sind die Verzweigungen (Primärmischer) jeweils durch einen Kreis markiert.

### AUSFÜHRLICHE BESCHREIBUNG

Soweit nicht anders angegeben oder aus dem Zusammenhang eindeutig eine andere Bedeutung ersichtlich ist, haben die folgenden Begriffe und Ausdrücke wenn sie in diesem Dokument, inklusive Beschreibung und Patentansprüchen, verwendet werden, die im Folgenden angegebenen Bedeutungen.

Der Ausdruck "bestehend aus" wie in diesem Dokument verwendet, bedeutet einschließend und begrenzt auf das, was dem Begriff "bestehend aus" folgt. Der Begriff "bestehend aus", gibt somit an, dass aufgeführte Elemente erforderlich oder notwendig sind und dass keine weiteren Elemente vorhanden sein dürfen. Der Begriff "im Wesentlichen bestehend aus" wird dahingehend verstanden, dass er bedeutet, dass jedwede Elemente, die nach dem Ausdruck definiert sind, umfasst sind und dass weitere Elemente, beispielsweise in einem Feststoff oder einer Zusammensetzung zugegen sein können, die die Aktivität oder Wirkung, die für die betreffenden Elemente in diesem Dokument angegeben sind, nicht verändern, also sie nicht beeinträchtigen und nicht zu ihr beitragen. Beispielsweise können ein oder mehr zusätzliche Trägermaterialien in einem Katalysator vorhanden sein, solange sie im Wesentlichen die katalytischen Eigenschaften nicht beeinflussen. Somit gibt der Ausdruck "im Wesentlichen bestehend aus" an, dass die definierten Elemente notwendig oder erforderlich sind, dass aber weitere Elemente optional sind und zugegen sein können oder nicht, je nachdem, ob sie für die Wirkung oder Wirksamkeit der definierten Elemente von Belang sind oder nicht.

Das Wort "etwa" bezieht sich wenn hier verwendet auf einen Wert, der für einen bestimmten Wert, wie von einem Durchschnittsfachmann bestimmt, innerhalb eines akzeptablen Fehlerbereichs liegt. Dies wird teilweise davon abhängig sein, wie der jeweilige Wert ermittelt oder gemessen worden ist, d.h. von den Einschränkungen des Messsystems. "Etwa" kann beispielsweise innerhalb einer Standardabweichung von 1 oder mehr bedeuten, je nach Gebrauch im jeweiligen Gebiet. Der Begriff "etwa" wird auch verwendet um anzugeben, dass der Betrag oder Wert der bezeichnete Wert sein kann oder ein anderer Wert, der näherungsweise gleich ist. Der Begriff soll ausdrücken, dass ähnliche Werte gleichwertige Ergebnisse oder Wirkungen, wie in diesem Dokument offenbart, begünstigen. In diesem Zusammenhang kann "etwa" sich auf einen Bereich von bis zu 10 % über und/oder unter einem bestimmten Wert beziehen. In einigen Ausführungsformen bezieht "etwa" sich auf einen Bereich von bis zu 5 % über und/oder unter einem bestimmten Wert, wie etwa 2 % über und/oder unter einem bestimmten Wert. In einigen Ausführungsformen bezieht "etwa" sich auf einen Bereich von bis zu 1 % über und/oder unter einem bestimmten Wert. In einigen Ausführungsformen bezieht "etwa" sich auf einen Bereich von bis zu 0,5 % über und/oder unter einem bestimmten Wert. In einer Ausführungsform bezieht sich "etwa" auf einen Bereich von bis zu 0,1 % über und/oder unter einem bestimmten Wert.

Der Konjunktionalausdruck "und/oder" zwischen mehreren Elementen, wenn hier verwendet, wird als sowohl individuelle als auch kombinierte Optionen umfassend verstanden. Sind beispielsweise zwei Elemente durch "und/oder" verknüpft, betrifft eine erste Option den Einsatz des ersten Elements ohne das zweite. Eine zweite Option betrifft den Einsatz des zweiten Elements ohne das erste. Eine dritte Option betrifft den Einsatz des ersten und des zweiten Elements zusammen. Es wird verstanden, dass jede beliebige dieser Optionen unter die Bedeutung des Ausdrucks fällt und somit die Bedingungen des Begriffs "und/oder", wie in diesem Dokument verwendet, erfüllt.

Singularformen wie "eine", "ein", "der", "die" oder "das" schließen die Pluralform ein, wenn sie in diesem Dokument verwendet werden. So bezeichnet beispielsweise eine Bezugnahme auf "eine Zelle" sowohl eine individuelle Zelle als auch eine Mehrzahl an Zellen. In einigen Fällen wird explizit der Ausdruck "ein oder mehrere" verwendet, um im jeweiligen Fall darauf hinzuweisen, dass die Singularform die Pluralform mit umfasst. Derartige explizite Hinweise schränken die allgemeine Bedeutung der Singularform nicht ein. Falls nicht anders angegeben, werden die Begriffe "zumindest", "mindestens" und "wenigstens", wenn sie eine Abfolge von Elementen vorangehen, dahingehend verstanden, dass sie sich auf jedes dieser Elemente beziehen. Die Begriffe "zumindest ein", "mindestens ein(e)", "wenigstens einer" oder "wenigstens eine(r) von" schließen beispielsweise ein, zwei, drei, vier oder mehr Elemente ein.

Der Ausdruck "zumindest im Wesentlichen bestehend aus" wird, wenn hier verwendet, als die Begriffe "im Wesentlichen bestehend aus" und "bestehend aus" umfassend verstanden. Der Begriff "zumindest im Wesentlichen bestehend aus", gibt somit an, dass in einigen Ausführungsformen aufgeführte Elemente erforderlich oder notwendig sind und dass keine weiteren Elemente vorhanden sein dürfen. Der Begriff "zumindest im Wesentlichen bestehend aus", gibt somit auch an, dass in einigen Ausführungsformen aufgeführte Elemente erforderlich oder notwendig sind, dass aber weitere Elemente optional sind und zugegen sein können oder nicht, je nachdem, ob sie für die Wirkung oder Wirksamkeit der definierten Elemente von Belang sind oder nicht. Es wird weiterhin verstanden, dass geringe Abweichungen über oder unter einen hier angegebenen Bereich eingesetzt werden können, um ein im Wesentlichen gleiches Ergebnis zu erzielen wie ein Wert, der innerhalb des Bereichs liegt. Falls nicht anders angegeben, ist die Offenbarung eines Bereichs auch als kontinuierlicher Bereich vorgesehen, inklusive aller Einzelwerte, die zwischen dem Minimal- und dem Maximalwert liegen.

Im Rahmen der Miniaturisierung sind mikrochemische Systeme populär, wobei unter Umständen ihr kleiner Querdurchmesser und die niedrige erzielbare Fließgeschwindigkeit einer effektiven Durchmischung im Wege stehen können. Dennoch ist für ein hier beschriebenes Verfahren die Grundstruktur von aufeinander folgenden Verzweigungen ausreichend. Die Verzweigungen weisen in einigen Ausführungsformen wenigstens eine T- oder eine Y-Verzweigung auf. Diese Grundstruktur von Verzweigungen kann wenn gewünscht um zusätzliche Elemente wie ein Fischgrätenmuster ("Herringbone"), inklusive einem versetzten Fischgrätenmuster, ergänzt werden. Dabei können Vertiefungen wie Rillen, die beispielsweise in einem Winkel zwischen etwa 10 ° und etwa 80° zur vorgesehenen Flussrichtung einer Flüssigkeit angeordnet sind, vorgesehen sein. In einigen Ausführungsformen kann ein verwendeter Mikrokanal auch einen Vortex-basierten Mikromischer aufweisen. Ein solcher Mikromischer zeichnet sich durch eine Krümmung aus, wie beispielsweise von Howell et al. (Lab Chip [2004] 4, 663-669) beschrieben. In einigen Ausführungsformen kann ein verwendeter Mikrokanal eine vorübergehende Veränderung des maximalen Wandabstands, inklusive einer Kammer mit einem Abschnitt aufweisen, in dem sich die Innenabmessungen in zumindest einer Dimension entlang des Flusses einer Flüssigkeit ändern. Eine entsprechende Veränderung des maximalen Wandabstands kann durch einen interdigitalen Mikromischer definiert sein. Interdigitale Mikromischer sind dem Fachmann bekannt und können Kammern aufweisen, die in Draufsicht eine rechteckige, eine dreieckige Form oder eine Schlitzform aufweisen, s. z.B. Hessel et al. (ALChE Journal [2003] 49, 3, 566-576) oder Hardt u. Schönfeld (AlChE Journal [2003] 49, 3, 578-584). Dabei können in einem Abschnitt eines Interdigitalmischers entlang der vorgesehenen Flussrichtung einer Flüssigkeit zusätzliche geometrische Elemente wie Zwischenwände oder Stege angebracht sein, die zwischen den Innenwänden des Mikrokanals angeordnet sind.

Der Mikrokanal kann Abschnitte von im Wesentlichen einheitlichem Wandabstand aufweisen. Derartige Abschnitte können im Wesentlichen linear sein. Beliebige Abschnitte des Mikrokanals können auch mit geometrischen Elementen versehen sein, die von der Linearität stark abweichen. Derartige Abschnitte, die sich auch wiederholen können, können beispielsweise ein Knick oder eine Krümmung sein. So kann ein Mikrokanal sowohl lineare Abschnitte als auch einen Bereich einer Vielzahl sich wiederholender Knicke enthalten. Beispiele geometrischer Elemente, die der Durchmischung dienen können, sind in den Figuren 1D bis 1H als "sekundäre Mischerstruktur" gezeigt.

Die aufeinander folgenden Verzweigungen können als passives Mischsystem eingesetzt werden. Daneben können zusätzlich auch aktive Komponenten eingesetzt werden, die sich bewegende Elemente zum Pumpen einsetzen. Auch mit Hilfe von Ultraschall lassen sich Mischvorgänge unterstützen. Werden in einem T-förmigen Mikromischer (engl. T-junction micromixer) zwei Ströme an Ausgangsstoffen gegeneinander geführt, so dass die beiden Eduktströme frontal aufeinander treffen, werden sie rechtwinklig zur Ausgangsströmungsrichtung abtransportiert. Bei dieser Strömungsführung tritt, u.a. abhängig von der Strömungsgeschwindigkeit, die sogenannte Engulfment-Strömung auf. Hierbei verdrillen sich die beiden Eduktströme und bilden feine Fluidlamellen aus, wodurch kurze Vermischungswege und bei der Fällung hohe Übersättigungen erreicht werden. Bei Reynoldszahlen unterhalb von etwa 240 wird in der Regel kaum Engulfment-Strömung beobachtet. Unterhalb einer Reynoldszahl von etwa 50 wird typischerweise diffusionskontrollierte Durchmischung beobachtet. Somit wird in einem hier beschriebenen Verfahren üblicherweise bei einer Reynoldszahl von etwa 240 oder mehr gearbeitet.

Ein Mikrokanalreaktor kann einen oder mehrere Mikrokanäle enthalten. Ein Mikrokanal in einem Mikrokanalreaktor, der sich für ein hier beschriebenes Verfahren eignet, hat typischerweise eine Gesamtkanallänge von etwa 10 mm bis etwa 400 mm. In einigen Ausführungsformen hat der Mikrokanal eine Gesamtkanallänge von etwa 10 mm bis etwa 5000 mm. In einigen Ausführungsformen hat der Mikrokanal eine Gesamtkanallänge von bis etwa 10.000 mm oder mehr. Ein entsprechender Mikrokanalreaktor hat typischerweise Mikrokanäle mit einem maximalen Innenabstand zwischen gegenüberliegenden Kanalwänden von etwa 10 µm bis etwa 10.000 µm In einigen Ausführungsformen haben sich gegenüberliegende Kanalwände eines Mikrokanals einen maximalen Abstand von etwa 20 µm bis etwa 2.000 µm. Beispielsweise kann ein Mikrokanal sich gegenüberliegende Kanalwände aufweisen, die einen maximalen Abstand von etwa 400 µm aufweisen. Der minimale Abstand der Kanalwände eines Mikrokanals liegt in einigen Ausführungsformen im Bereich von etwa 2 µm bis etwa 10.000 µm. Das Gesamtvolumen an Flüssigkeit, dass ein geeigneter Mikrokanal in einem Mikroreaktor aufnehmen kann, liegt typischerweise im Bereich von etwa 1 nL bis etwa 40 ml. In einigen Ausführungsformen liegt das Gesamtvolumen an Flüssigkeit, dass ein solcher Mikrokanal aufnehmen kann, im Bereich von etwa 50 nL bis etwa 10 ml. In einigen Ausführungsformen weist ein Mikrokanalreaktor mehrere Mikrokanäle mit einem Gesamtvolumen von beispielsweise mehreren Litern auf.

Für die Einlässe und den Auslass des Mikrokanals in einem Mikrokanalreaktor können beliebige Dimensionen gewählt werden, solange sich die Abmessungen mit dem gewünschten Gesamtformat des Mikrokanalreaktors vereinbaren lassen. Die Einlässe und der Auslass können unabhängig voneinander dimensioniert sein. In einigen Ausführungsformen weichen die Dimensionen aller Einlässe und des Auslasses voneinander ab. In einigen Ausführungsformen haben alle Einlässe und der Auslass identische Dimensionen. Typischerweise liegt die Tiefe eines Einlasses und des Auslasses im Bereich der Kanalhöhe.

Der Mikrokanalreaktor kann einen oder mehrere Mikrokanäle aufweisen. Ein Mikrokanal kann auch Gabelungen und Abzweigungen aufweisen. In einer typischen Ausführungsform besteht der Mikrokanalreaktor aus einem zusammenhängenden Mikrokanalsystem, das in Betrieb einen Fluss von den Einlässen zum Auslass definiert. Dabei können die einzelnen Mikrokanalabschnitte von oben betrachtet geradlinig (linear) sein oder eine oder mehrere Krümmungen aufweisen. In einer Ausführungsform weist ein Mikrokanal mindestens einen Mikrokanalabschnitt auf, der im Wesentlichen geradlinig ist und mindestens einen Mikrokanalabschnitt, der eine oder mehrere Krümmungen aufweist. Eine solche Krümmung kann sowohl symmetrisch als auch unsymmetrisch sein. In einer Ausführungsform sind alle Mikrokanalabschnitte im Wesentlichen geradlinig. In einer Ausführungsform weisen alle Mikrokanalabschnitte sich periodisch wiederholende Krümmungen auf.

Der Mikrokanal oder die Mikrokanäle des Mikrokanalreaktors können Abschnitte von vollständig oder nahezu konstantem maximalen Innenwandabstand aufweisen und/oder über seinen/ihren gesamten Bereich einen vollständig oder nahezu konstanten maximalen Innenwandabstand aufweisen. In einigen Ausführungsformen weist ein Mikrokanal des verwendeten Mikrokanalreaktors einen oder mehrere Bereiche auf, in dem bzw. denen der maximale Innenwandabstand sich entlang der Achse des Mikrokanals verändert. In einigen Ausführungsformen ist der maximale Innenwandabstand eines Mikrokanals in einer Dimension vollständig oder nahezu konstant. Beispielsweise kann ein Mikrokanal eine im Wesentlichen einheitliche Kanalhöhe aufweisen. In einer anderen Dimension kann der maximale Innenwandabstand eines Mikrokanals uneinheitlich sein. Beispielsweise kann ein Mikrokanal eine zumindest teilweise variierende Kanalbreite aufweisen.

In einigen Ausführungsformen ist der maximale Innenwandabstand eines Mikrokanals in im Wesentlichen allen Dimensionen uneinheitlich. So können Verengungen oder Ausbuchtungen vorhanden sein. In einigen Ausführungsformen variiert der Innenwandabstand entlang der Achse des Mikrokanals periodisch. In einigen Ausführungsformen ist der maximale Innenwandabstand eines Mikrokanals in einer ersten Dimension vollständig konstant oder nahezu konstant und auch in einer zweiten Dimension vollständig oder nahezu konstant. Dabei kann der maximale Innenwandabstand in der ersten Dimension vom maximalen Innenwandabstand in der zweiten Dimension verschieden sein. Beispielsweise kann ein Mikrokanal ein Höhe-/Breite-Verhältnis von etwa 0,5 bis etwa 2 aufweisen.

Der Mikrokanal oder die Mikrokanäle des Mikrokanalreaktors können jedes gewünschte Querschnittsprofil haben. Sie können beispielsweise ein kreisförmiges Profil haben. In einigen Ausführungsformen ist das Querschnittsprofil oval oder auch eiförmig. In einigen Ausführungsformen hat das Querschnittsprofil die Form eines Halbkreises. Das Querschnittsprofil kann auch dreieckig sein. In einigen Ausführungsformen ist das Querschnittsprofil viereckig. Das Querschnittsprofil kann beispielsweise quadratisch oder rechteckig sein. In einigen Ausführungsformen ist der Querschnitt trapezförmig. Das Querschnittsprofil eines Mikrokanals kann entlang der Achse des Mikrokanals konstant sein. In einigen Ausführungsformen verändert sich das Querschnittsprofil eines Mikrokanals entlang der Achse des Mikrokanals.

Ein geeignetes Mikrokanalsystem kann als wiederverwendbares System oder als Einwegsystem konzipiert sein. Als Material für das Mikrokanalsystem kommt jedes gewünschte Material in Frage, dass mit den gewählten Salzen des Trägermetalls oder Trägerhalbmetalls, der Übergangsmetalle und der alkalischen Lösung im Wesentlichen keine Reaktion eingeht. Zumindest sollten die Materialien der Wände des Mikrokanals oder der Mikrokanäle sowie der Einlässe und des Auslasses so gewählt werden, dass das Kanalsystem während des hier beschriebenen Verfahrens seine Integrität behält. Als geeignete Materialien kommen beispielsweise Metalle, Halbmetalle wie Silizium, Glas oder Kunststoffe, inklusive Kunstharzen, in Frage. Die Wände des Mikrokanals oder der Mikrokanäle, der Einlässe und des Auslasses können vorbehandelt, inklusive beschichtet sein, um die Oberflächencharakteristika und/oder die chemische Beständigkeit der Innenwände des Mikrokanalsystems zu beeinflussen. Beispielsweise kann die Oberfläche von Mikrokanälen und/oder Ein-/Auslässen auf thermischem, mechanischem, elektrischem oder chemischem Wege verändern. So kann beispielsweise die Oberfläche von Polydimethylsiloxan (PDMS) durch Oxidation mit Sauerstoff oder einem Luftplasma hydrophiler bzw. polarer gestaltet werden. Auch eine Beschichtung mit einem Kunststoffmaterial mit einem Polymer wie beispielsweise einem hydrophilen Polymer kann eingesetzt werden. In Frage kommen beispielsweise Hexamethyldisilazan, Trimethylchlorsilan, Polydimethylsiloxan, Poly(methylmethacrylat), oder Polyurethan.

Zum Überwachen eines hier vorgestellten Systems, beispielsweise auch beim Etablieren einer bestimmten Ausführungsform desselben, können diverse bekannte Techniken verwendet werden, beispielsweise optische Verfahren. Zur Visualisierung der Durchmischung kann beispielsweise die Technik der planaren Laser induzierten Fluoreszenz (PLIF) eingesetzt werden. Als weiteres Beispiel lassen sich mit Hilfe der FT-IR-Spektroskopie die Konzentrationen von Substanzen in einem Mikrokanal verfolgen, es können ggf. an mehreren Punkten in einem Mikrokanal Messungen vorgenommen werden. Die Durchmischung und der Reaktionsverlauf kann mit solchen Techniken in der Regel in Echtzeit verfolgt werden.

Der durch das hier offenbarte Verfahren herstellbare Mischkatalysator weist als Komponente ein Oxid eines ersten Übergangsmetalls auf. Das erste Übergangsmetall ist aus der achten Gruppe des Periodensystems der Elemente nach IUPAC ausgewählt, auch als Eisengruppe bezeichnet. Gemäß der alten Nomenklatur mit römischen Ziffern zählt diese Gruppe zur Gruppe VIII. Das erste Übergangsmetall kann beispielsweise Osmium sein. In einigen Ausführungsformen kann das erste Übergangsmetall Eisen sein. Als weitere Komponente weist der Mischkatalysator ein Oxid eines zweiten Übergangsmetalls auf. Das zweite Übergangsmetall ist in einigen Ausführungsformen aus der elften Gruppe des Periodensystems nach IUPAC ausgewählt, auch als Kupfergruppe bezeichnet. Gemäß der alten Nomenklatur mit römischen Ziffern wurde diese Gruppe als Gruppe Ib bezeichnet. In einigen Ausführungsformen ist das zweite Übergangsmetall Silber. In einigen Ausführungsformen ist das zweite Übergangsmetall Kupfer. Das zweite Übergangsmetall kann auch aus der zwölften Gruppe des Periodensystems nach IUPAC ausgewählt sein, die auch als Zinkgruppe bezeichnet wird. Gemäß der alten Nomenklatur mit römischen Ziffern ist diese Gruppe die Gruppe IIb. In einigen Ausführungsformen ist das zweite Übergangsmetall Cadmium. In einigen Ausführungsformen ist das zweite Übergangsmetall aus der siebten Gruppe des Periodensystems nach IUPAC ausgewählt, die auch Mangangruppe genannt wird. Gemäß der alten Nomenklatur mit römischen Ziffern wurde diese Gruppe als Gruppe VIIa bezeichnet.

Als Komponente weist der Mischkatalysator auch ein Oxid eines Trägermetalls oder Trägerhalbmetalls auf. Das Trägermetall bzw. -halbmetall kann aus der dreizehnten Gruppe des Periodensystems der Elemente nach IUPAC ausgewählt sein, auch Borgruppe genannt. Gemäß der alten Nomenklatur mit römischen Ziffern ist diese Gruppe die Gruppe IIIb. In einigen Ausführungsformen ist das Oxid eines Trägermetalls Aluminiumoxid (Al₂O₃). In einigen Ausführungsformen ist das Oxid eines Trägermetalls Titandioxid (Titan(IV)-oxid, TiO₂). In einigen Ausführungsformen ist das Oxid eines Trägerhalbmetalls Siliziumdioxid (SiO₂).

In einigen Ausführungsformen wird auf den gewonnen Rohkatalysator ein Oxid eines Alkalimetalls aufgebracht. Der Rohkatalysator kann beispielsweise in Form von getrockneten Partikeln gewonnen sein, auf die anschließend ein Oxid eines Alkalimetalls aufgebracht wird. Der Rohkatalysator kann aus dem Auslass des Mikrokanalsystems aufgefangen sein. Der Rohkatalysator kann nach Auffangen bereits gewaschen sein. Der Rohkatalysator kann nach Auffangen bereits getrocknet sein. Das Aufbringen des Oxids eines Alkalimetalls kann beispielsweise durch Imprägnieren mit einem Salz des Alkalimetalls erfolgen. Das Alkalimetall kann beispielsweise Kalium sein. Das Salz des Alkalimetalls kann in einigen Ausführungsformen ein Karbonat sein.

Ein Verfahren gemäß der vorliegenden Offenbarung umfasst es, das Einfließen einer nicht-gesättigten Lösung eines Salzes des Trägermetalls oder Trägerhalbmetalls, beispielsweise Aluminiumnitrat, durch einen ersten Einlass des Mikrokanalreaktors zu erlauben. Der Einlass ist in typischen Ausführungsformen ein Einlass eines einzigen Mikrokanals. Die nicht-gesättigte Lösung des Salzes des Trägermetalls oder Trägerhalbmetalls kann in einigen Ausführungsformen eine Konzentration von etwa 0,005 Mol/l bis etwa 0,1 Mol/l des Salzes des Trägermetalls/Trägerhalbmetalls aufweisen. In einigen Ausführungsformen liegt die Konzentration des Salzes des Trägennetalls/Trägerhalbmetalls bei etwa 0,03 Mol/l. In einigen Ausführungsformen liegt die Konzentration des Salzes des Trägermetalls/-halbmetalls bei etwa 0,01 Mol/l. Das Verfahren umfasst auch, das Einfließen eines Fällungsreagenzes durch einen zweiten Einlass des Mikrokanals zu erlauben. Das Fällungsreagenz ist in der Regel eine alkalische Lösung, beispielsweise eine Carbonatlösung wie Natriumcarbonat. Das Verfahren kann es umfassen, das Einfließen einer alkalischen Lösung, z.B. einer Carbonatlösung wie Natriumcarbonat, durch den zweiten Einlass des Mikrokanals zu erlauben. Die beiden Lösungen strömen in das System des Mikrokanals und treffen aufeinander.

Typischerweise sind der erste und der zweite Einlass so angeordnet, dass die Lösung des Salzes des Trägermetalls oder Trägerhalbmetalls und die alkalische Lösung aufeinandertreffen, bevor sie auf eine Lösung eines Salzes des ersten Übergangsmetalls oder eine Lösung eines Salzes des zweiten Übergangsmetalls treffen. In einigen Ausführungsformen sind der erste und der zweite Einlass so angeordnet, dass die beiden Lösungen aufeinandertreffen, bevor sie auf eine weitere Lösung treffen. In Ausführungsformen, in denen sich der erste und der zweite Einlass des Mikrokanals an gegenüberliegenden Enden einer Verzweigung wie z.B. einer T-Verzweigung befinden, strömen die beiden Lösungen unmittelbar aufeinander zu. Das Salz des Trägermetalls oder Trägerhalbmetalls reagiert somit mit der alkalischen Lösung, bevor ein Kontakt mit einer Lösung des ersten oder zweiten Übergangsmetalls erfolgt. Es entsteht ein erstes Reaktionsgemisch, typischerweise in Form einer Suspension. Das erste Reaktionsgemisch enthält nach wie vor alkalische Lösung wie z.B. Carbonatlösung, inklusive Hydrogencarbonatlösung.

Ein Verfahren gemäß der vorliegenden Offenbarung umfasst weiterhin, das Einfließen einer nicht-gesättigten Lösung eines Salzes des ersten Übergangsmetalls, beispielsweise Eisennitratlösung, durch einen dritten Einlass des Mikrokanals zu erlauben. Die nicht-gesättigte Lösung des Salzes des ersten Übergangsmetalls kann in einigen Ausführungsformen eine Konzentration von etwa 0,005 Mol/l bis etwa 0,1 Mol/l des Salzes des ersten Übergangsmetalls aufweisen. In einigen Ausführungsformen liegt die Konzentration des Salzes des ersten Übergangsmetalls bei etwa 0,03 Mol/l. In einigen Ausführungsformen liegt die Konzentration des Salzes des ersten Übergangsmetalls bei etwa 0,01 Mol/l.

Das erste Reaktionsgemisch trifft somit auf das Salz des ersten Übergangsmetalls. Es kommt zur Reaktion des ersten Übergangsmetalls mit der alkalischen Lösung in Gegenwart der Partikel der Suspension des ersten Reaktionsgemischs (s.o.). Da der erste und der dritte Einlass des Mikrokanals miteinander durch Verzweigungen des Mikrokanals in Verbindung stehen, erfolgt zudem auf Grund des Einströmens der Lösung eines Salzes des ersten Übergangsmetalls eine Durchmischung. Es entsteht ein zweites Reaktionsgemisch, typischerweise ebenfalls in Form einer Suspension. Das zweite Reaktionsgemisch enthält nach wie vor alkalische Lösung.

Zu einem Verfahren gemäß der vorliegenden Offenbarung zählt es zudem, das Einfließen einer nicht-gesättigten Lösung eines Salzes des zweiten Übergangsmetalls, beispielsweise Kupfernitratlösung, durch den dritten Einlass oder durch einen vierten Einlass des Mikrokanals zu erlauben. Die nicht-gesättigte Lösung des Salzes des zweiten Übergangsmetalls kann in einigen Ausführungsformen eine Konzentration von etwa 0,001 Mol/l bis etwa 0,1 Mol/l des Salzes des zweiten Übergangsmetalls aufweisen. Beispielsweise kann die nicht-gesättigte Lösung des Salzes des zweiten Übergangsmetalls eine Konzentration von etwa 0,005 Mol/l bis etwa 0,1 Mol/l des Salzes des zweiten Übergangsmetalls aufweisen. In einigen Ausführungsformen liegt die Konzentration des Salzes des zweiten Übergangsmetalls bei etwa 0,03 Mol/l. In einigen Ausführungsformen liegt die Konzentration des Salzes des zweiten Übergangsmetalls bei etwa 0,01 Mol/l.

Bei einem Einleiten der Lösung des zweiten Übergangsmetalls durch den dritten Einlass trifft das erste Reaktionsgemisch somit auch auf das Salz des zweiten Übergangsmetalls. Das Verfahren weist es somit auf, eine Reaktion des zweiten Übergangsmetalls mit der alkalischen Lösung in Gegenwart der Partikel der Suspension des ersten Reaktionsgemischs (s.o.) zuzulassen. Der erste und der dritte Einlass des Mikrokanals stehen miteinander durch Mikrokanalverzweigungen in Verbindung, sodass das Einströmen der Lösung eines Salzes des zweiten Übergangsmetalls eine Durchmischung bewirkt. Wie bereits angegeben, wird durch den dritten Einlass des Mikrokanals auch eine nicht-gesättigte Lösung eines Salzes des ersten Übergangsmetalls zugeführt. Dies kann gleichzeitig erfolgen. In einigen Ausführungsformen kann ein Gemisch einer nicht-gesättigten Lösung eines Salzes des ersten Übergangsmetalls und einer nicht-gesättigte Lösung eines Salzes des zweiten Übergangsmetalls durch den dritten Einlass zugeführt werden. Es können auch zeitlich versetzt ein Gemisch einer nicht-gesättigten Lösung eines Salzes des ersten Übergangsmetalls und einer nicht-gesättigte Lösung eines Salzes des zweiten Übergangsmetalls durch den dritten Einlass zugeführt werden. In diesem Fall erfolgt ein Kontakt des Salzes des zweiten Übergangsmetalls mit dem Salze des zweiten Übergangsmetalls ggf. erst zwischen dem dritten Einlass und dem Auslass. In beiden Fällen entsteht ein drittes Reaktionsgemisch, typischerweise ebenfalls in Form einer Suspension.

Bei einem Einleiten der Lösung des zweiten Übergangsmetalls durch einen vierten Einlass trifft das zweite Reaktionsgemisch somit auf das Salz des zweiten Übergangsmetalls. Das Verfahren umfasst somit, es zu erlauben, dass das Salz des zweiten Übergangsmetalls mit der alkalischen Lösung in Gegenwart der Partikel der Suspension des zweiten Reaktionsgemischs in Kontakt kommt (s.o.). Wie bereits erläutert, stehen auch der dritte und der vierte Einlass des Mikrokanals miteinander durch T-Verzweigungen in Verbindung. Daher kommt es durch das Einströmen der Lösung eines Salzes des zweiten Übergangsmetalls zur Durchmischung. Es entsteht auch bei Einsatz eines vierten Einlasses ein drittes Reaktionsgemisch. Das dritte Reaktionsgemisch reagiert zu einem Rohkatalysator, typischerweise als Suspension.

Eine mögliche Ausgestaltung des Verfahrens lässt sich an Hand der Figuren 1A oder 1B veranschaulichen. Diese Figuren zeigen in Draufsicht ein Mikrokanalsystem, wie es hier verwendet werden kann, z.B. auf einem Chip. Das Eintreten in das Mikrokanalsystem der Lösung eines Salzes des Trägermetalls/-halbmetalls und der alkalischen Lösung erfolgt über die Einlässe A und B. In einer ersten T-Kreuzung werden die wässrige Lösung eines Salzes des Trägermetalls, z.B. Aluminiumnitratlösung, und eine alkalische Lösung, z.B. wässrige Ammoniaklösung, vermischt. Die sich bildende Suspension wird in der nachfolgenden T-Kreuzung mit einer wässrigen Lösung des ersten Übergangsmetalls, z.B. Eisennitratlösung, vermischt.

Das ausfallende Oxid des ersten Übergangsmetalls, z.B. die ausfallende Eisenoxidphase, wird somit auf die bereits bestehenden Trägermetall/-halbmetall-oxidpartikel, z.B. Aluminiumoxidpartikel, aufgefällt. Dieser Vorgang wird ein weiteres Mal wiederholt, nämlich mit einer wässrigen Lösung des zweiten Übergangsmetalls, z.B. mit Kupfernitrat. Durch den Ausgang E können danach die in der Regel suspendierten Rohkatalysatorpartikel den Reaktor verlassen.

Die in einem hier offenbarten Verfahren eingesetzten Lösungen eines Trägermetalls oder Trägerhalbmetalls und/oder eines Übergangsmetalls können verdünnte Lösungen sein, die durch Verdünnen einer Stammlösung hergestellt werden. Eine entsprechende Stammlösung kann beispielsweise eine bei Raumtemperatur gesättigte Lösung sein, die mit Reinstwasser verdünnt wird.

Durch Variation der Kanalbreiten bei der Fertigung lässt sich die Strömungsgeschwindigkeit der verschiedenen Mischungszonen einstellen. Des Weiteren kann über die Variation der Abstände zwischen den Verzweigungen/Kreuzungen die jeweilige Verweilzeit in den Mischungszonen eingestellt werden. Wie bereits erläutert, sind in einem hier eingesetzten Mikrokanal typischerweise zwischen dem ersten und dem zweiten Einsatz sowie zwischen dem zweiten und dem dritten Einlass Verzweigungen angeordnet. Diese Verzweigungen können beispielsweise dazu dienen, einem Mikrokanal, der sich vom ersten Einlass zum Auslass erstreckt, über derartige Verzweigungen eine Verbindung mit dem zweiten und dem dritten Einlass zur Verfügung zu stellen. Soweit ein vierter Einlass vorhanden ist, ist typischerweise zwischen vierten Einlass und dem Auslass eine Verzweigung angeordnet. Auch diese Verzweigungen können beispielsweise dazu dienen, einen Mikrokanal, der sich vom ersten Einlass zum Auslass erstreckt, über die Verzweigungen mit dem vierten Einlass zu verbinden.

So kann sich zwischen dem ersten Einlass und dem zweiten Einlass eine einzige Verzweigung befinden. Es können sich zwischen dem ersten Einlass und dem zweiten Einlass auch mehrere Verzweigungen befinden. Es kann sich auch zwischen dem zweiten Einlass und dem dritten Einlass eine einzige Verzweigung befinden. Es können sich zwischen dem zweiten Einlass und dem dritten Einlass auch mehrere Verzweigungen befinden. Zwischen dem dritten Einlass und dem Auslass kann sich ebenfalls eine einzige Verzweigung befinden. Es können sich zwischen dem dritten Einlass und dem Auslass auch mehrere Verzweigungen befinden. In Ausführungsformen, in denen ein vierter Einlass vorhanden ist, kann sich zwischen dem dritten Einlass und dem vierten Einlass eine einzige Verzweigung befinden. Es können sich zwischen dem dritten Einlass und dem vierten Einlass auch mehrere Verzweigungen befinden. In Ausführungsformen, in denen ein vierter Einlass vorhanden ist, kann sich zwischen dem vierten Einlass und dem Auslass eine einzige Verzweigung befinden. Es können sich zwischen dem vierten Einlass und dem Auslass auch mehrere Verzweigungen befinden.

Ohne Beschränkung auf eine Theorie kann das hier offenbarte Verfahren dahingehend aufgefasst werden, dass nur das Salz des Trägermetalls oder Trägerhalbmetalls, beispielsweise Aluminiumnitrat, gegen das in der Regel im Überschuss vorliegende Fällungsreagenz gefällt wird. Anschließend werden wässrige Salze des ersten und des zweiten Übergangsmetalls, z.B. weitere Metallnitratlösungen, zugegeben, so dass sich die hierbei ausfallenden Metalloxide auf der Oberfläche der bereits vorhandenen Partikel abscheiden. Durch den Einsatz eines mikrofluidischen Mischers ist es dabei möglich, den zeitlichen Abstand zwischen den jeweiligen Fällungsschritten definiert einzustellen. Der zeitliche Abstand kann hierbei typischerweise bis in den Millisekunden-Bereich reduziert werden, wie es bei konventionellen Batchverfahren im Rührkessel nicht möglich ist.

Die folgenden Erläuterungen beziehen sich zum Teil auf einen Katalysator, der für die katalytische Umwandlung von CO₂ zu Kohlenwasserstoffen eingesetzt wird. Diese Erläuterungen sind exemplarisch und dienen der Veranschaulichung an Hand eines konkreten Beispiels. Die hier vorgestellten Verfahren und Verwendungen sind allgemein bei der Herstellung von Mischkatalysatoren einsetzbar, insbesondere bei der Herstellung von Metalloxid-Mischkatalysatoren.

Wie bereits einleitend erläutert, wird ein aus Eisenoxid, Kupferoxid, und einem Träger wie Aluminiumoxid bestehender Mischkatalysator konventionell durch Cofällung hergestellt. Wie beispielweise von Riedel et al. beschrieben (s.o.), wird eine wässrige Nitratlösung der Metalle Fe, Cu und Al gegen eine wässrige Ammoniaklösung gefällt. Durch die Verschiebung des pH-Wertes fallen die gelösten Metalle nahezu simultan als Oxide aus. Die Produktsuspension wird gefiltert und die erhaltenen Partikel werden anschließend gewaschen und getrocknet. Auf den Katalysator wird auch ein Oxid eines Alkalimetalls aufgebracht. Die getrocknete Produktsuspension wird mit Kaliumcarbonat imprägniert und erneut getrocknet. Wann ein Metall als Oxid präzipitiert, wird von der pH-Wert-abhängigen Löslichkeit der jeweiligen Metallsalze bestimmt. Daher ist bei dieser Vorgehensweise die Reihenfolge nicht einstellbar, in der die einzelnen Metalle ausfallen. Folglich kann auch die räumliche Anordnung der entstehenden Metalloxidphasen nicht beeinflusst werden. Insbesondere die Position der lediglich als inerte Trägersubstanz genutzten Al₂O₃-Phase ist hierbei von Relevanz.

Ein hier beschriebenes Verfahren ermöglicht typischerweise eine Kontrolle über die Reihenfolge, in der die metallischen Phasen ausfallen und sich abscheiden. Der Fachmann wird diese Kontrollmöglichkeit für die weitere Optimierung von Katalysatoren zu schätzen wissen.

Ohne eine Festlegung auf bestimmte Mechanismen oder Theorien, hängen in der Regel die für eine Fällung entscheidenden Schritte der Partikelbildung und des Partikelwachstums im Wesentlichen von der Höhe der Übersättigung ab. Im Bereich hoher Übersättigung dominiert die Partikelbildung, so dass viele kleine Partikel entstehen. Bei geringer Übersättigung dominiert hingegen das Partikelwachstum wodurch größere Partikel gebildet werden. Da bei der Katalyse meist kleine Katalysatorpartikel mit großer Oberfläche vorteilhaft sind, ist auch eine hohe lokale Übersättigung von Vorteil. Eine hohe lokale Übersättigung wird bei einem wie hier beschriebenen Verfahren, dass Mikromischen involviert, durch hohe Mischungsintensitäten erreicht.

Ohne sich auf eine Theorie einschränken zu wollen, bietet die Verwendung eines Mikromischers typischerweise Vorteile hinsichtlich des Energieeintrages in der Mischungszone. Wie sich herausgestellt hat, führt eine konventionelle Cofällung durch den verhältnismäßig geringen Energieeintrag bei der Vermischung zu einer potenziell ungünstigen Partikelgrößenverteilung und ermöglich keine direkte Einflussnahme auf die Partikelgröße.

So konnte beispielsweise von Gradl et al. (Chemical Engineering and Processing [2006] 45, 908-916) gezeigt werden, dass die Nutzung von mikroskaligen Effekten bei der Vermischung im Mikromischer zu einer deutlichen Verbesserung der Partikelgrößenverteilung führen kann. Bei den mit Bariumsulfat durchgeführten Fällungen in einem T-förmigen Mikromischer konnte ein Zusammenhang zwischen lokalem Energieeintrag in der Mischungszone und der entstehenden Partikelgröße gefunden werden.

Bei einer kontinuierlichen Fällung in einem Mikrokanal, der typischerweise in einem Mikrokanalreaktor enthalten ist, lassen sich in der Regel sämtliche Bedingungen, insbesondere der lokale Energieeintrag in der Mischungszone besser steuern als im herkömmlichen Batchverfahren. Bei der Herstellung von Katalysatoren kann somit in typischen Ausführungsformen eine Reproduzierbarkeit erreicht werden, die der von herkömmlichen Batchverfahren überlegen ist. Beim herkömmlichen Verfahren besteht das Risiko, dass mit unterschiedlichen Batchansätzen Katalysatoren mit leicht unterschiedlichen Eigenschaften erhalten werden. Diese Unterschiede sind meist auf undefinierte Mischzustände im Rührkessel zurückzuführen.

Im Rahmen des BMBF geförderten Verbundvorhabens 01R105027 - "Entwicklung von Methanolsynthesekatalysatoren als Basis für nachhaltige Ressourcennutzung" wurden bereits Untersuchungen zur Partikelfällung im Mikromischer durchgeführt. In dem eingesetzten Verfahren wurden verschiedene Metallnitrate jeweils einzeln gegen ein Fällungsreagenz gefällt. Anschließend wurden die erhaltenen Suspensionen miteinander vermischt. Anhand der durchgeführten Versuche zur Fällung von Cu/Zn/Al-Katalysatoren konnte gezeigt werden, dass die sequentielle Fällung im Mikromischer vorteilhaft gegenüber der Cofällung im Mikromischer ist. Hierzu wurde jeweils eine der drei Komponenten Cu, Zn und Al einzeln gegen Natriumcarbonat gefällt und parallel dazu die anderen beiden Komponenten als Cofällung gegen Natriumcarbonat gefällt. Anschließend wurden die beiden erhaltenen Suspensionen in einem weiteren Mischer zusammengeführt, so dass die gefällten Partikel agglomerieren konnten.

Der Inhalt von wissenschaftlichen Artikeln, Patenten und Patentanmeldungen sowie der Inhalt von allen anderen Dokumenten und elektronisch zugänglichen Daten, die hier erwähnt oder zitiert werden, wird hiermit durch Bezug in ihrer Gesamtheit im gleichen Maße aufgenommen, als wäre jede einzelne Veröffentlichung ausdrücklich und individuell als durch Bezug aufgenommen bezeichnet. Im Falle eines Widerspruchs gibt das vorliegende Dokument den Ausschlag. Der Anmelder behält sich das Recht vor, jedwedes, inklusive alles Material und Daten aus jedweden solchen Artikeln, Patenten und Patentanmeldungen oder anderen physischen und/oder elektronischen Dokumenten physisch in dieses Dokument aufzunehmen.

Die Nennung oder Diskussion eines zuvor veröffentlichten Dokuments in dieser Beschreibung sollte nicht notwendigerweise als Anerkenntnis verstanden werden, dass ein solches Dokument zum Stand der Technik zählt oder Allgemeinwissen des Fachmanns darstellt.

Die Verfahren, Anwendungen, Zusammensetzungen und Mischkatalysatoren, die hier veranschaulichend beschrieben sind, können in geeigneter Weise ohne ein einzelnes Element oder Elemente, Beschränkung oder Beschränkungen ausgeführt und eingesetzt werden, die hier nicht explizit offenbart sind. Die hier verwendeten Begriffe und Ausdrücke sind ferner als beschreibende Begriffe und nicht als Einschränkung verwendet, und es besteht keine Absicht, beim Verwenden solcher Begriffe und Ausdrücke irgendwelche Äquivalente der gezeigten und beschriebenen Merkmale oder Teile davon auszuschließen. Es wird erkannt, dass verschiedene Abwandlungen im Umfang der beanspruchten Erfindung möglich sind. So sollte daher verstanden werden, dass der Fachmann auf Abwandlungen und Variationen der offenbarten Ausführungsformen zurückgreifen kann, obwohl die hier offenbarten Verfahren, Anwendungen, Zusammensetzungen und Kombinationen für den Fachmann in ausreichendem Detail beschrieben und veranschaulicht sind, um sie anzuwenden, und dass solche Abwandlungen und Variationen als innerhalb des Schutzumfangs der Erfindung befindlich anzusehen sind.

Es sollte somit verstanden werden, dass obgleich die Verfahren, Anwendungen, Zusammensetzungen und Kombinationen, die hier in ausreichend Detail beschrieben und anhand bestimmter spezifischer Ausführungsformen veranschaulicht sind, so dass sie vom Fachmann ausgeführt werden können, die Erfindung nicht darauf beschränkt sein soll. Vielmehr werden Abwandlungen und Variationen der beschriebenen Ausführungsformen als im Umfang der Erfindung befindlich angesehen.

Die Erfindung ist hier ausgedehnt und allgemein beschrieben worden. Jede der engeren Spezies und Subgenus-Gruppierungen, die unter die allgemeine Offenbarung fallen, bilden ebenfalls einen Teil der Verfahren, Anwendungen, Zusammensetzungen und Kombinationen. Das schließt die allgemeine Beschreibung der Verfahren, Anwendungen, Zusammensetzungen und Kombinationen mit einer Bedingung oder einer negativen Beschränkung ein, die einen Gegenstand aus dem Genus ausschließen, unabhängig davon, ob der ausgeschlossene Gegenstand hier explizit wiedergegeben ist.

Weitere Ausführungsformen sind in den nachfolgenden Patentansprüchen wiedergegeben. Sind ferner Merkmale oder Aspekte der Erfindung in Form von Markush-Gruppen angegeben, wird der Fachmann erkennen, dass die Erfindung auf diese Weise auch hinsichtlich jedes individuelle Mitglieds oder jeder individuellen Untergruppe von Mitgliedern von Markush-Gruppen beschrieben ist.

Wie ein durchschnittlicher Fachmann im Fachgebiet an Hand der vorliegenden Offenbarung bereitwillig zu schätzen wissen wird, können andere stoffliche Zusammensetzungen, Mittel, Verwendungen oder Schritte, die zur Zeit existieren oder später entwickelt werden und die im Wesentlichen das gleiche Ergebnis erzielen wie die hier beschriebenen beispielhaften Ausführungsformen, gemäß der vorliegenden Erfindung ebenfalls eingesetzt werden.

### BEISPIEL

Das folgende Beispiel veranschaulicht ein exemplarisches Vorgehen in einer Ausführungsform des hier beschriebenen Verfahrens.

Für die Herstellung des Metalloxidmischkatalysators wurden wässrige Lösungen mit 13,2 mmol/L Fe(NO₃)₃, 3,6 mmol/L Al(NO₃) und 1,2 mmol/L Cu(NO₃)₂, sowie eine 0,3 molare wässrige Ammoniaklösung pulsationsfrei in einem Mikromischer der in Fig. 1A dargestellten Form zusammengeführt. Der aus fotosensitivem Glas gefertigte Mikromischer verfügt über einen Kanal mit drei aufeinanderfolgenden T-Kreuzungen und insgesamt vier Einlässen und einen Auslass, welche über HPLC Flangeless Fittings kontaktiert werden konnten. Der Kanal wies hierbei eine quadratische Querschnittfläche mit einer Höhe von 400µm auf. Die Zuführung der Edukte erfolgte mithilfe von massenflussgeregelten Mikrozahnringpumpen mit einstellbaren Volumenströmen von 0,5 - 12 ml/min.

Zum Starten der Mikrofällung wurden nacheinander die Pumpen der Metallnitratlösungen gestartet. Die Aluminiumnitratlösung wurde am Einlass 1 mit 3 ml/min, die Eisennitratlösung am Einlass 3 mit 6 ml/min und die Kupfernitratlösung am Einlass 4 mit 12 ml/min zugeführt. Nach einer Einlaufzeit von zwei Minuten erfolgte der Start der zur Ammoniaklösung gehörenden Pumpe mit einem Fördervolumenstrom von 3 ml/min. Nun konnte die sequentielle Fällung des Mischkatalysators kontinuierlich betrieben werden. Durch das Vermischen des Aluminiumnitrates mit der Ammoniaklösung im ersten T-Mischer kam es zur Ausfällung von Aluminiumoxidpartikeln, welche der Strömung folgend zum zweiten T-Mischer transportiert wurden. Hier erfolgt der Kontakt mit der Eisennitratlösung, wodurch Eisenoxidpartikel ausfielen und sich auf den bereits vorhandenen Aluminiumoxidpartikeln abschieden, welche zusätzlich als Kristallisationskeime wirkten. Im dritten T-Mischer wird die erhaltene - immer noch alkalische - Suspension mit der Kupfernitratlösung vermischt, wodurch Kupferoxide ausfielen und sich auf den bereits existierenden Partikeln abschieden. Der so hergestellte Vorkatalysator wurde in der Mutterlauge aufgefangen, abfiltriert, gewaschen, getrocknet und zerkleinert. Im Anschluss daran erfolgte eine Imprägnierung mit 0,26 g Kaliumcarbonat je g Vorkatalysator sowie eine Kalzinierung bei 400 °C.

## Patentansprüche

1. Verfahren zur Herstellung eines Mischkatalysators, wobei der Mischkatalysator ein Oxid eines ersten Übergangsmetalls aus der achten Gruppe, ein Oxid eines zweiten Übergangsmetalls aus der siebten, elften oder zwölften Gruppe und ein Oxid eines Trägermetalls oder Trägerhalbmetalls aus der dreizehnten oder vierzehnten Gruppe oder aus den Lanthanoiden aufweist und wobei das Verfahren aufweist:
Einleiten einer nicht-gesättigten Lösung eines Salzes des Trägermetalls oder Trägerhalbmetalls in einen Mikrokanal durch einen ersten Einlass des Mikrokanals,
Einleiten einer alkalischen Lösung durch einen zweiten Einlass des Mikrokanals,
Einleiten einer nicht-gesättigten Lösung eines Salzes des ersten Übergangsmetalls in einen Mikrokanal durch einen dritten Einlass des Mikrokanals,
Einleiten einer nicht-gesättigten Lösung eines Salzes des zweiten Übergangsmetalls in einen Mikrokanal durch den dritten Einlass des Mikrokanals oder durch einen vierten Einlass des Mikrokanals,
wobei der erste, der dritte und ggf der vierte Einlass des Mikrokanals miteinander durch Verzweigungen des Mikrokanals in Verbindung stehen und wobei der Mikrokanalreaktor des Weiteren einen Auslass aufweist.

2. Verfahren nach Anspruch 1, wobei der Auslass, der erste, der dritte und ggf der vierte Einlass des Mikrokanals miteinander durch Verzweigungen des Mikrokanals in Verbindung stehen.

3. Verfahren nach Anspruch 1 oder 2, wobei sich der erste und/oder der zweite Einlass an einem ersten Ende des Mikrokanals befinden und der Auslass an einem zweiten Ende.

4. Verfahren nach einem der Ansprüche 1 bis 3, wobei des Weiteren der erste und der zweite Einlass des Mikrokanals sich an gegenüberliegenden Enden einer Verzweigung des Mikrokanals befinden.

5. Verfahren nach einem der vorhergehenden Ansprüche, wobei ein Einleiten der nicht-gesättigten Lösung eines Salzes des Trägermetalls oder Trägerhalbmetalls, ein Einleiten einer alkalischen Lösung, ein Einleiten einer nicht-gesättigten Lösung eines Salzes des ersten Übergangsmetalls und ein Einleiten einer nicht-gesättigten Lösung eines Salzes des zweiten Übergangsmetalls gleichzeitig erfolgen.

6. Verfahren nach einem der vorhergehenden Ansprüche, aufweisend Einleiten einer nicht-gesättigten Lösung des Salzes des zweiten Übergangsmetalls durch einen vierten Einlass des Mikrokanals, wobei sich der dritte Einlass zwischen dem zweiten Einlass und dem vierten Einlass befindet oder wobei sich der vierte Einlass zwischen dem zweiten Einlass und dem dritten Einlass befindet.

7. Verfahren nach einem der vorhergehenden Ansprüche, wobei die nicht-gesättigte Lösung eines Salzes des Trägermetalls oder Trägerhalbmetalls, die nicht-gesättigte Lösung eines Salzes des ersten Übergangsmetalls und/oder die nicht-gesättigte Lösung eines Salzes des zweiten Übergangsmetalls eine Konzentration des Salzes des betreffenden Metalls von 0,05 M oder weniger aufweist.

8. Verfahren nach einem der vorhergehenden Ansprüche, wobei wenigstens eine Verzweigung des Mikrokanals eine T- oder eine Y-Verzweigung ist.

9. Verfahren nach einem der vorhergehenden Ansprüche, des Weiteren aufweisend: den aus dem Auslass austretenden Rohkatalysator auffangen.

10. Verfahren nach Anspruch 9, des Weiteren aufweisend: auf den gewonnen Rohkatalysator ein Oxid eines Alkalimetalls aufbringen.

11. Verfahren nach Anspruch 10, wobei ein Oxid eines Alkalimetalls aufbringen aufweist: Imprägnieren mit einem Salz des Alkalimetalls.

12. Verfahren nach einem der vorhergehenden Ansprüche, wobei das Salz des Trägermetalls oder Trägerhalbmetalls ein Nitrat ist.

13. Verfahren nach einem der vorhergehenden Ansprüche, wobei das Trägermetall oder Trägerhalbmetall Aluminium, Titan und/oder Silicium aufweist.

14. Verwendung eines Mikrokanalreaktors zur Herstellung eines Mischkatalysators, wobei der Mikrokanalreaktor einen Mikrokanal mit zwei oder mehr Verzweigungen, einen ersten Einlass, einen zweiten Einlass und einen dritten Einlass sowie einen Auslass aufweist, wobei jeder Einlass und der Auslass sich am Ende einer Verzweigung befinden.

15. Mischkatalysator, aufweisend ein Oxid eines ersten Übergangsmetalls aus der achten Gruppe, ein Oxid eines zweiten Übergangsmetalls aus der siebten, elften oder zwölften Gruppe und ein Oxid eines Trägermetalls oder Trägerhalbmetalls aus der dreizehnten oder vierzehnten Gruppe oder aus den Lanthanoiden, wobei der Mischkatalysator durch das Verfahren gemäß einem der Ansprüche 1 bis 13 herstellbar ist.

## Geänderte Patentansprüche

### Geänderte Patentansprüche gemäss Regel 137(2) EPÜ.

1. Verfahren zur Herstellung eines Mischkatalysators, wobei der Mischkatalysator ein Oxid eines ersten Übergangsmetalls aus der achten Gruppe, ein Oxid eines zweiten Übergangsmetalls aus der siebten, elften oder zwölften Gruppe und ein Oxid eines Trägermetalls oder Trägerhalbmetalls aus der dreizehnten oder vierzehnten Gruppe oder aus den Lanthanoiden aufweist und wobei das Verfahren aufweist:
Einleiten einer nicht-gesättigten Lösung eines Salzes des Trägermetalls oder Trägerhalbmetalls in einen Mikrokanal durch einen ersten Einlass des Mikrokanals,
Einleiten einer alkalischen Lösung durch einen zweiten Einlass des Mikrokanals,
Einleiten einer nicht-gesättigten Lösung eines Salzes des ersten Übergangsmetalls in einen Mikrokanal durch einen dritten Einlass des Mikrokanals,
Einleiten einer nicht-gesättigten Lösung eines Salzes des zweiten Übergangsmetalls in einen Mikrokanal durch den dritten Einlass des Mikrokanals oder durch einen vierten Einlass des Mikrokanals,
wobei der erste, der dritte und ggf. der vierte Einlass des Mikrokanals miteinander durch Verzweigungen des Mikrokanals in Verbindung stehen und wobei der Mikrokanalreaktor des Weiteren einen Auslass aufweist.

2. Verfahren nach Anspruch 1, wobei der Auslass, der erste, der dritte und ggf. der vierte Einlass des Mikrokanals miteinander durch Verzweigungen des Mikrokanals in Verbindung stehen.

3. Verfahren nach Anspruch 1 oder 2, wobei sich der erste und/oder der zweite Einlass an einem ersten Ende des Mikrokanals befinden und der Auslass an einem zweiten Ende.

4. Verfahren nach einem der Ansprüche 1 bis 3, wobei des Weiteren der erste und der zweite Einlass des Mikrokanals sich an gegenüberliegenden Enden einer Verzweigung des Mikrokanals befinden.

5. Verfahren nach einem der Ansprüche 3 oder 4, wobei ein Einleiten der nicht-gesättigten Lösung eines Salzes des Trägermetalls oder Trägerhalbmetalls, ein Einleiten einer alkalischen Lösung, ein Einleiten einer nicht-gesättigten Lösung eines Salzes des ersten Übergangsmetalls und ein Einleiten einer nicht-gesättigten Lösung eines Salzes des zweiten Übergangsmetalls gleichzeitig erfolgen.

6. Verfahren nach einem der Ansprüche 1 bis 5, aufweisend Einleiten einer nicht-gesättigten Lösung des Salzes des zweiten Übergangsmetalls durch einen vierten Einlass des Mikrokanals, wobei sich der dritte Einlass zwischen dem zweiten Einlass und dem vierten Einlass befindet oder wobei sich der vierte Einlass zwischen dem zweiten Einlass und dem dritten Einlass befindet.

7. Verfahren nach einem der vorhergehenden Ansprüche, wobei die nicht-gesättigte Lösung eines Salzes des Trägermetalls oder Trägerhalbmetalls, die nicht-gesättigte Lösung eines Salzes des ersten Übergangsmetalls und/oder die nicht-gesättigte Lösung eines Salzes des zweiten Übergangsmetalls eine Konzentration des Salzes des betreffenden Metalls von 0,05 M oder weniger aufweist.

8. Verfahren nach einem der vorhergehenden Ansprüche, wobei wenigstens eine Verzweigung des Mikrokanals eine T- oder eine Y-Verzweigung ist.

9. Verfahren nach einem der vorhergehenden Ansprüche, wobei der zweite, der dritte und ggf. der vierte Einlass miteinander durch T-Verzweigungen oder durch Y-Verzweigungen des Mikrokanals in Verbindung stehen.

10. Verfahren nach einem der vorhergehenden Ansprüche, des Weiteren aufweisend: den aus dem Auslass austretenden Rohkatalysator auffangen.

11. Verfahren nach Anspruch 10, des Weiteren aufweisend: auf den gewonnen Rohkatalysator ein Oxid eines Alkalimetalls aufbringen.

12. Verfahren nach Anspruch 11, wobei ein Oxid eines Alkalimetalls aufbringen aufweist:
Imprägnieren mit einem Salz des Alkalimetalls.

13. Verfahren nach einem der vorhergehenden Ansprüche, wobei das Salz des Trägermetalls oder Trägerhalbmetalls ein Nitrat ist.

14. Verfahren nach einem der vorhergehenden Ansprüche, wobei das Trägermetall oder Trägerhalbmetall Aluminium, Titan und/oder Silicium aufweist.

15. Mischkatalysator, aufweisend ein Oxid eines ersten Übergangsmetalls aus der achten Gruppe, ein Oxid eines zweiten Übergangsmetalls aus der siebten, elften oder zwölften Gruppe und ein Oxid eines Trägermetalls oder Trägerhalbmetalls aus der dreizehnten oder vierzehnten Gruppe oder aus den Lanthanoiden, wobei der Mischkatalysator durch das Verfahren gemäß einem der Ansprüche 1 bis 14 herstellbar ist.
